# EUROPEAN PATENT SPECIFICATION

(11) **EP 4 132 774 B1**
(45) Date of publication and mention of the grant of the patent: **18.02.2026**
(21) Application number: 22736409.8
(22) Date of filing: 20.05.2022
(51) Int. Cl.: B29C 70/32, B29C 70/54

(54) **ANNULAR STRUCTURES FORMED FROM COMPOSITE MATERIALS AND SYSTEMS AND METHODS FOR FORMING ANNULAR STRUCTURES FROM COMPOSITE MATERIALS**
AUS VERBUNDSTOFFEN GEFORMTE RINGFÖRMIGE STRUKTUREN SOWIE SYSTEME UND VERFAHREN ZUR FORMUNG RINGFÖRMIGER STRUKTUREN AUS VERBUNDSTOFFEN
STRUCTURES ANNULAIRES FORMÉES DE MATÉRIAUX COMPOSITES ET SYSTÈMES ET PROCÉDÉS DE FORMATION DE STRUCTURES ANNULAIRES À PARTIR DE MATÉRIAUX COMPOSITES

(30) Priority: 20.05.2021 US 202163191238 P; 19.05.2022 US 202217748965
(43) Date of publication of application: 15.02.2023
(73) Proprietor: Astro Tech Co., Ltd., Changhua County (TW)
(72) Inventor: BOSWORTH, Benjamin K., Morrison, Colorado 80465 (US); GIARAFFA, Matthew T., Golden, Colorado 80401 (US); BUCHHOLZ, Meghan A., Denver, Colorado 80236 (US); RAMSAY, Ian Cole, Arvada, Colorado 80002 (US); NICHOLS, Samuel D., Lakewood, Colorado 80226 (US)
(74) Representative: van Dam, Vincent
(86) International application number: PCT/US2022/030197
(87) International publication number: WO 2022/246160

(56) References cited:
- EP-A1- 1 506 882
- WO-A2-2004/074010
- DE-A1- 102008 028 441
- US-A1- 2012 264 536

## Description

### FIELD

The present disclosure provides annular structures formed from composite materials. Disclosed but not claimed are systems and methods for forming annular structures from composite materials. The annular structures can include, but are not limited to, bicycle wheel rims.

### BACKGROUND

Composite materials have a variety of advantages as compared to alternate materials, such as steel, aluminum, or wood. For example, composite materials can be used to form structures having intricate shapes, allowing strength and aesthetics to be optimized. Composite materials have also been used to form annular structures, such as the rims of bicycle wheels. The potential strength to weight ratio of structures formed using carbon fiber composites is very high, and products formed from carbon fiber composites, commonly referred to as simply "carbon fiber", are also popular with consumers.

Widespread adoption of composite materials has been limited by the relatively high cost of forming composite or carbon fiber structures. These costs are a result of various factors, such as the cost of the materials themselves, and the labor-intensive processes used to form such structures. For example, composite structures are typically formed by laying multiple sheets of composite material in a mold. Each sheet includes fibers that are oriented along one or several directions or plies, and that generally extend from one edge of the sheet to another. More particularly, different layers of material, having the associated ply or plies oriented in a specific direction, are placed in a mold and set into a final form using a two-part epoxy. In addition to being time-consuming and labor-intensive, such techniques are prone to defects when used to form complex structures time efficiently. In addition, composite structures have typically used thermoset materials that are relatively brittle and difficult to recycle.

As an alternative to composite structures that are formed by layering multiple sheets of material in a mold, structures can be formed relatively quickly and cheaply using injection molding. However, the structures formed using such processes are typically quite weak. In addition, it is impossible to form certain three-dimensional shapes using injection molding.

US 2012/264536 A1 introduces a golf club shaft, which has multiple component parts each including thermoplastic fiber reinforced resin layers. The structure for the golf club shaft relates to a tubular structure.

### SUMMARY

The present disclosure provides annular composite structures as defined in claim 1. Methods and systems for forming annular composite structures are also disclosed but not claimed. In accordance with at least some embodiments of the present disclosure, the annular composite structures can include wheel rims formed from one or more sheets of fiber reinforced thermoplastic material. Each of the sheets can include one or more layers. The sheet or sheets are fused to form the completed annular structure.

Methods in accordance with embodiments of the present disclosure include providing a mandrel or mold. A sheet or strip of fiber reinforced thermoplastic material is clamped or otherwise fixed to the mandrel, and the mandrel is turned, bending a portion of the strip about the mandrel. In accordance with at least some embodiments of the present disclosure, the strip can be warmed before or as it is bent about the mandrel. In addition, the mandrel can itself be heated. The portion of the strip that has been bent about the mandrel can also be placed under pressure, for example by a shoe or rollers. The shoe or rollers can also be heated. In accordance with embodiments of the present disclosure, multiple strips of fiber reinforced thermoplastic or composite material can be used to form the annular structure. Where multiple strips are used, an additional strip can be clamped to the mandrel such that it at least partially overlaps a strip previously bent about the mandrel. Overlapping portions of the multiple strips are then at least partially consolidated as the strips are placed on the mandrel. After all of the strips have been bent about the mandrel, a final step of heating and applying pressure can be performed to fuse the strips, or portions of a single strip, to one another. The now integral annular composite structure can then be removed from the mold, and any desired finishing steps can be performed.

Systems for forming annular structures can include a feed assembly, a preheating assembly, a mandrel, and a forming assembly that includes an external mold or forming surface. The feed assembly is configured to receive a strip of fiber reinforced thermoplastic material, and to pass the strip of material past or through the preheating assembly, before introducing the strip of material to the mandrel. The preheating assembly can include, for example, infrared heaters positioned on opposite sides of the strip of material. The mandrel can include clamps that function to fix an end of a strip of fiber reinforced thermoplastic material to the mandrel. The mandrel generally incorporates or forms an inner mold having a shape that mirrors the shape of the inner surfaces of the annular structure (i.e., the surfaces that generally face a center point of the completed structure).

In accordance with embodiments of the present disclosure, each strip of fiber reinforced thermoplastic material contains multiple sheets or layers of fiber reinforced composite thermoplastic material. Each sheet can have fibers oriented in different directions. For example, a first sheet can have relatively short fibers oriented randomly, a second sheet can include relatively long, unidirectional fibers oriented parallel to one another in a first direction, a third sheet can include relatively long unidirectional fibers oriented parallel to one another in a second direction that is at a selected angle relative to the fibers of the second sheet, and a fourth sheet with fibers of different lengths and orientations.

Additional features and advantages of embodiments of the present disclosure will become more readily apparent from the following description, particularly when considered together with the accompanying drawings.

### BRIEF DESCRIPTION OF THE DRAWINGS

**Fig. 1** depicts a bicycle wheel incorporating an annular composite structure in accordance with embodiments of the present disclosure;
**Fig. 2** is a perspective view of an annular composite structure in accordance with embodiments of the present disclosure;
**Fig. 3** is a side view in elevation of an annular composite structure in accordance with embodiments of the present disclosure;
**Figs. 4A** and **4B** depict example cross-sections of an annular composite structure in accordance with embodiments of the present disclosure;
**Fig. 5A** depicts a relationship between components of an annular composite structure in accordance with embodiments of the present disclosure in a side elevation view;
**Figs. 5B and 5C** depict example relationships between components of an annular composite structure in accordance with embodiments of the present disclosure in cross sectional views;
**Figs. 6A and 6B** depict a component of an annular composite structure in accordance with embodiments of the present disclosure in side elevation and top plan views respectively;
**Figs. 6C and 6D** depict variants of a component of an annular composite structure in accordance with embodiments of the present disclosure in end elevation views;
The following figures show embodiments of the present disclosure which are not encompassed by the claims.
**Figs. 7A-7D** are plan views depicting a system for forming annular composite structures in accordance with embodiments of the present disclosure;
**Figs. 8A-8D** are cross-sectional views of portions of a system for forming annular composite in accordance with embodiments of the present disclosure;
**Fig. 9** depicts steps of forming an annular composite structure in accordance with embodiments of the present disclosure; and
**Fig. 10** is a flowchart depicting a method for forming an annular composite structure in accordance with embodiments of the present disclosure.

### DETAILED DESCRIPTION

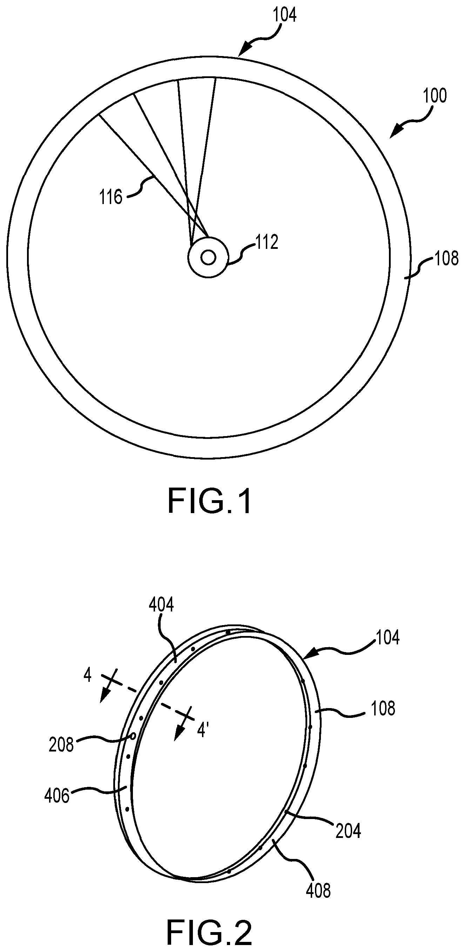

**Fig. 1** depicts a bicycle wheel 100 that includes an example of an annular composite structure 104 formed from fiber reinforced thermoplastic material in accordance with embodiments of the present disclosure. In this example the annular composite structure 104 is a bicycle wheel rim 108. In addition to the rim 108, the wheel 100 generally includes a hub 112 and spokes 116 interconnecting the rim 108 to the hub 112. In addition to a bicycle wheel rim 108, an annular composite structure 104 in accordance with embodiments of the present disclosure can include various other annular structures.

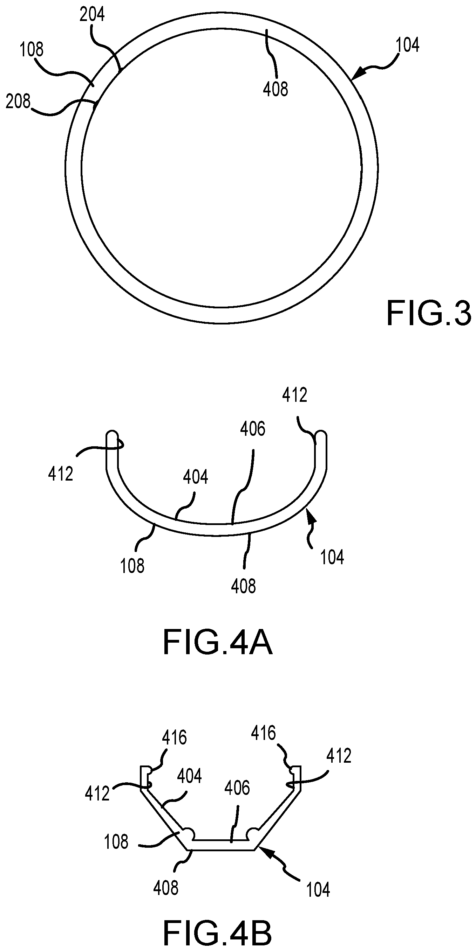

**Figs. 2** and **3** are perspective and elevation views respectively of the annular composite structure 104 in the form of a bicycle wheel rim 108 in accordance with embodiments of the present disclosure. As shown in these figures, the rim 108 can include spoke holes 204 and a valve hole 208. **Figs. 4A** and **4B** depict variants of the rim 108 in a cross section taken at section line 4-4' in **Fig. 2****.** As shown in at least the perspective and cross-section views, the rim 108 or structure 104 has an outer (or outward facing) circumferential surface 404 and an inner (or inward facing) circumferential surface 408.

The outer circumferential surface 404 can be dished in overall profile (in cross section), and can include a flat, dished, or otherwise profiled (in cross-section) central support section 406. The inner circumferential surface 408 can have a profile that generally mirrors the profile of the outer circumferential surface 404. In addition, the rim 108 can include a pair of flanges 412 for engaging the sides or the beads of a beaded tire (not shown) that extend from the central support section 406. As shown in the example of **Fig. 4A****,** the structure 104 can be generally uniform in thickness, in which case the inner circumferential surface 408 can have a profile that generally mirrors the profile of the outer circumferential surface 404. Alternatively, as shown in the example of **Fig. 4B****,** the structure 104 can feature areas or sections of varying thickness, forming shoulders, tapered elements, grooves, or the like. In addition, at least some embodiments of the present disclosure can include enlarged or hook sections 416 proximate the edges of the flanges 412 (as shown in **Fig. 4B****)** for engaging the beads of a mounted beaded or clincher tire. Other embodiments can be configured as "hookless" rims 108, in which the flanges 412 have generally featureless tire engaging surfaces (as shown in **Fig. 4A****).** Still other embodiments can be formed without flanges 412 extending from the central support section 406, as in rims 108 configured for use with tubular tires, or rims configured for use with airless or non-pneumatic tires.

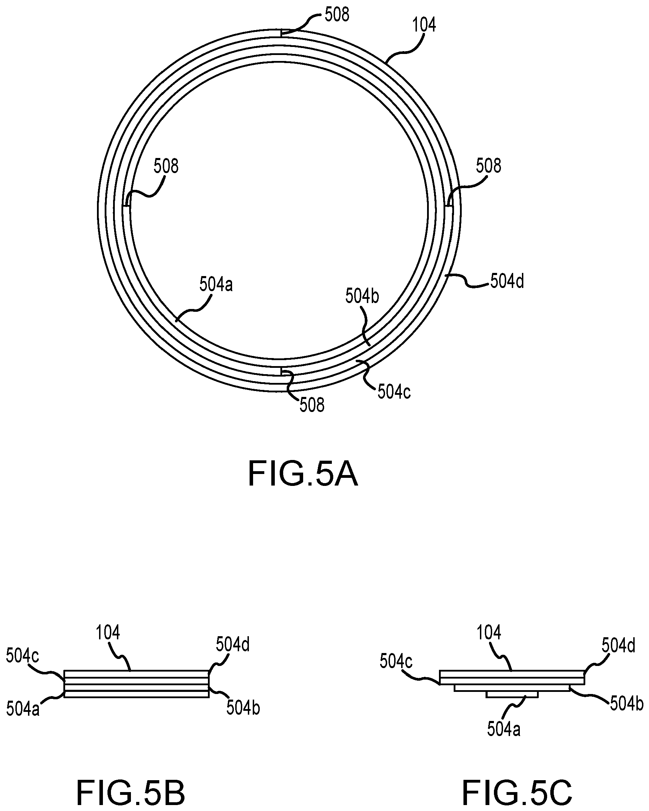

In accordance with embodiments of the present disclosure, an annular composite structure 104 can be formed from multiple component parts. For example, but without limitation, and as depicted in **Figs. 5A-5C****,** a single annular composite structure 104 can be formed from four component parts 504, labeled 504a-504d in the figures (note that the thickness of the individual component parts 504 relative to other dimensions of those parts have been exaggerated for illustration purposes). Each component part 504 in this example is a strip of fiber reinforced thermoplastic material. The length of the component part or strip 504 is equal to or about equal to the circumference of the annular structure 104(where "about" is equal to +/- 10%). Accordingly, the ends of each strip 504 join or butt against each other at a seam 508. As shown in **Fig. 5A****,** the different component parts 504 can be incorporated into the structure 104 such that their associated seams 508 are offset from one another. In this example, four component parts 504 having a length that is about equal to the circumference of the annular structure 104 are combined to form a four layered structure 104. Moreover, the seams 508 are offset from one another by about 90 degrees. As described in greater detail elsewhere herein, each component part 504 can be fused to one or more of the other component parts 504, forming an integral composite structure 104. In accordance with other embodiments of the present disclosure, a single component part 504 can have a length that is different than a circumference of the annular structure 104. For example, multiple component parts 504, each having a length that is less than a circumference of the annular structure 104, can be incorporated into that structure 104. For instance, eight component parts that each have a length of about one-half the circumference of the annular structure 104 can be combined to form a four layered structure, and the seams can be offset from one another by about 45 degrees. As still another example, the annular structure can include one or more component parts 504 with a length that is greater than the circumference of the annular structure 104. For instance, two component parts 504 each having a length that is twice that of the annular structure 104 can be combined to form a four layered structure 104, and their seams can be offset by 180 degrees. As another example, a single component part 504 having a length that is two or more times the circumference of the annular structure 104 can be used, alone or in combination with other component parts 504, to form a multiple layered structure 104. As a still further example, an annular structure can include component parts 504 of different lengths, such as one component part 504 having a length about equal to the circumference of the structure 104, and two component parts 504 having a length of about half the circumference of the structure 104, to form a two layered annular structure 104. Although various examples have been given that recite particular numbers and relationships of component parts 504, it should be appreciated that embodiments of the present disclosure are not necessarily limited to those example configurations, and that other configurations are possible.

As shown in **Figs. 5B** and **5C****,** which depict component parts 504 of a composite structure 104 in a transverse cross section, prior to forming the final cross sectional shape of the structure 104, different component parts 504 can have the same or different widths. For instance, as shown in **Fig. 5B****,** each component part 504 can have the same width, and that width can be equal or about equal to a width of the annular composite structure, or that is wide enough to span the entire width of the annular composite structure 104 after molding and fusing, as described elsewhere herein, to achieve the desired final shape of the composite structure 104, has been completed. Alternatively, as shown in **Fig. 5C****,** different component parts 504 can have different widths, and thus less than all of the component parts 504 have a width that is enough to span the entire width of the formed composite structure 104. In accordance with further embodiments of the present disclosure, different component parts 504 can have different thicknesses. In accordance with still further embodiments of the present disclosure, different component parts can have different widths and/or thicknesses at different locations within the structure 104.

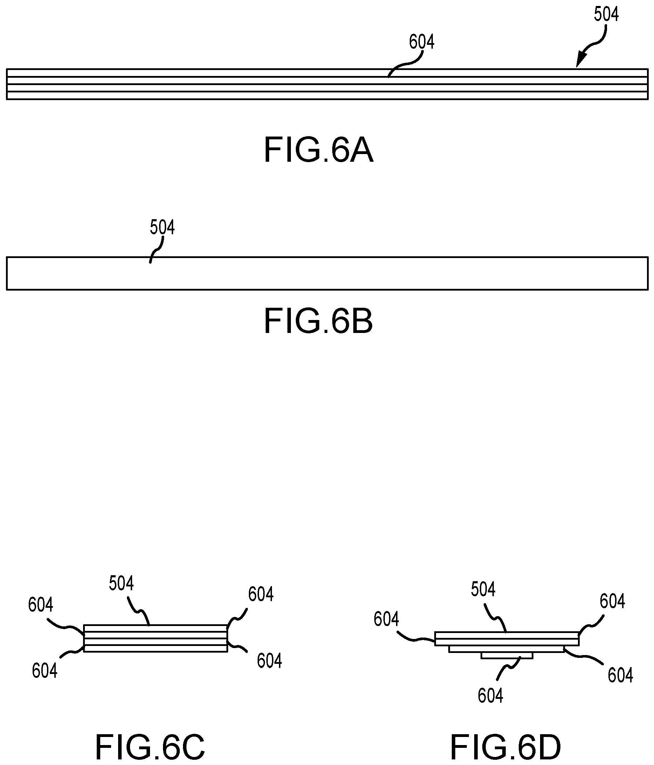

**Figs. 6A** and **6B** depict an example component part 504 of an annular composite structure 104 in side elevation and top plan views respectively. **Figs. 6C** and **6D** depict variants of the example component part of **Figs. 6A** and **6B** in end elevation views. As previously noted, the length of each strip or component part 504 can be equal or about equal to the circumference of the annular composite structure 104. In accordance with other embodiments of the present disclosure, some or all of the strips or component parts 504 have a length that is greater or less than the circumference of the annular composite structure 104. In accordance with still other embodiments of the present disclosure, an annular composite structure 104 can be formed using a single strip or component part 504 with a length that is greater than the circumference of the annular structure 104. In accordance with still further embodiments of the present disclosure, an annular composite structure can include one or more strips or component parts 504 that wrap around the circumference of the annular structure 104 multiple (e.g. 2-5) times.

In addition, as depicted (in exaggerated form) in **Figs. 6A, 6C** and **6D****,** each strip or component part 504 can include a stack of multiple sheets or layers 604 of fiber reinforced thermoplastic material. Alternatively, a component part 504 can include a single layer 604 of fiber reinforced thermoplastic material. Each layer 604 can have a size that is equal or about equal to the finished size of the component part 504, as depicted in **Figs. 6A** and **6C****.** Alternatively, a strip 504 can be formed from partially overlapping layers 604 having an individual size that is smaller than the component 504 incorporating the layers 604. For instance, a component part 504 can be contoured in cross section by incorporating individual sheets 604 having different widths, as depicted in **Fig. 6D****.** As still another example, different layers 604 within a component part 504 can have dimensions that vary along the length of the layer 604. In addition, each layer 604 can itself include one or more layers or plies of fibers embedded in a thermoplastic material. Different layers 604 within a component part 504 can have different fiber orientations and configurations. For example, one or more sheets 604 within a strip 504 can feature relatively long fibers that are parallel to one another (i.e. extending along a common direction ± 10°), and with some or all of the fibers extending between opposite ends of the sheet 604 (i.e. parallel to the longitudinal axis of the layer 604). As another example, one or more sheets 604 within a strip 504 can feature relatively long fibers that are parallel to one another and that are oriented at a nonzero angle relative to a longitudinal axis of the strip 504 in which the sheet 604 is incorporated. In particular, a strip 504 can include at least some layers 604 with relatively long reinforcing fibers at a selected angle relative to other layers 604 within the same strip 504. The layers 604 with relatively long fibers can have those fibers configured unidirectionally, such that the fibers 512 extend in the same general direction, but not necessarily parallel to one another. Other layers 604 can include fibers of moderate length (e.g., greater than 10mm) that have varying angles relative to one another. Still other layers 604 can have relatively short, randomly oriented fibers 512. More particularly, the fibers can be randomly oriented in at least a plane encompassing the edges of the layer when that layer 604 is in a flat configuration. Moreover, the fibers in a layer 604 incorporating randomly oriented fibers can be relatively short (e.g. less than 10 mm), and generally do not extend between opposite edges of the layer 604. In accordance with still other embodiments, the fibers within a sheet 604 can be woven, with subsets of fibers at selected angles with respect to other subsets of fibers within the layer 604. Although a strip 504 having four layers 604 is illustrated, it should be appreciated that a strip 504 can include any number of layers 604.

In accordance with at least some embodiments of the present disclosure, the strip 504 is formed as a planar or substantially planar panel from textile-like composite sheets or layers 604. The individual sheets may or may not be flexible at room temperature. Each of the composite sheets 604 may be in the form of a substantially continuous sheet, for example in the shape of a rectangle, that is trimmed to form edges and to size the respective sheet 604 for inclusion in the strip 504. The sheets or layers 604 are then stacked with one another to form the layup of the composite strip 504, and then may be fused, to complete the strip 504. Alternatively, some or all of the composite sheets 604 may be trimmed after being fused to one or more other composite sheets 604. As a further example, the fusing of multiple sheets 604 to form a composite strip 504 can be performed while the sheets are held under tension. As still another example, the layers 604 of a strip 504 are loosely stacked or only partially consolidated prior to winding the strip 504 about itself or other strips 504 of the structure 104.

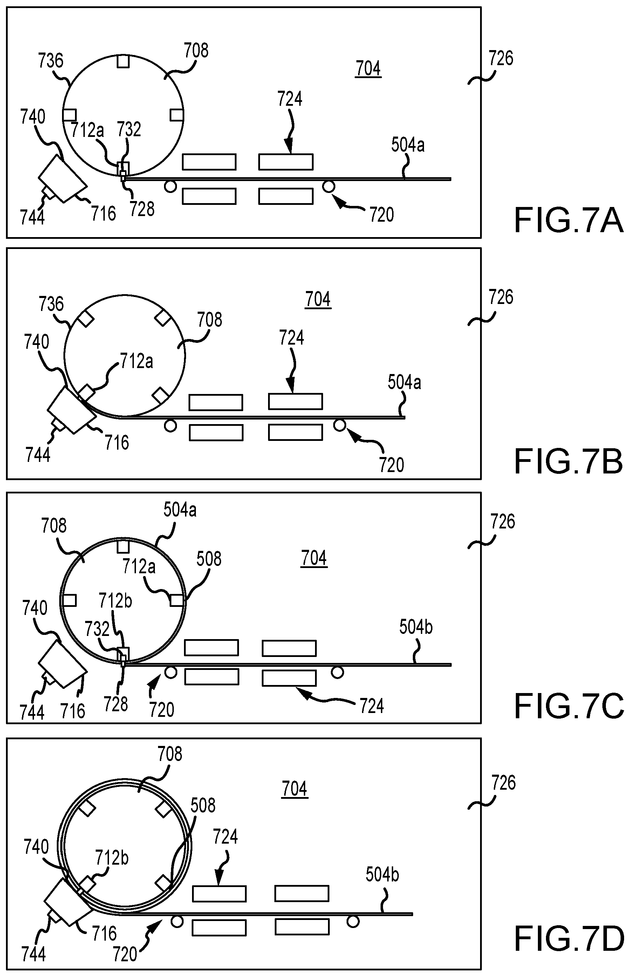

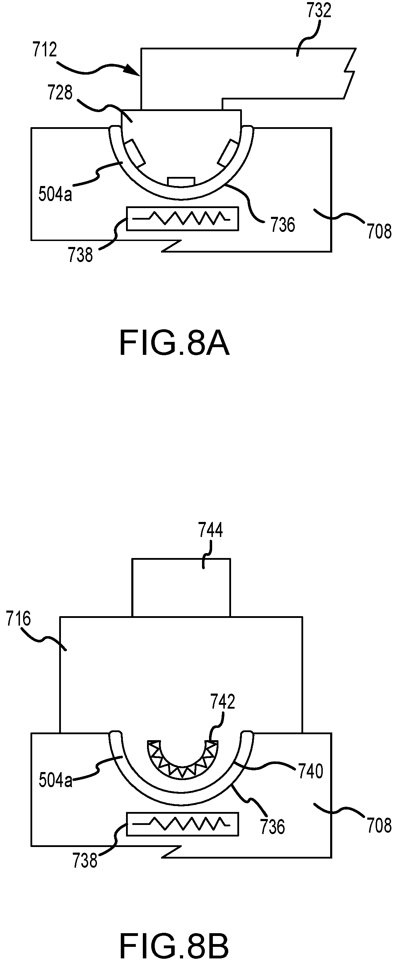

The following passages describe an exemplary system and an exemplary method for forming the aforementioned annular composite structure; the system (or apparatus) and the method are not encompassed by the claims but are considered as useful for understanding the invention. **Figs. 7A-7D** and **8A-8D** depict components of an apparatus or system 704 for manufacturing an annular composite structure 104 in accordance with embodiments of the present disclosure. In general, the apparatus 704 includes a mandrel 708. One or more clamps or clamp assemblies 712 are provided as part of or attached to the mandrel 708. In the illustrated example, clamp assemblies 712 or mounting points for a clamp assembly 712 are located at 90 degree intervals around the mandrel 708. The system 704 additionally includes a forming assembly 716, for example configured as a shoe or roller assembly, adjacent the mandrel 708. A feed assembly 720 is also adjacent to the mandrel 708, and extends through a preheating assembly 724. The system 704 can further include a base structure or assembly 726 through which various components of the system 704 are interconnected, and which can house or mount other components of the system 704, such as control electronics, motors, power supplies, switches, operator interfaces, and the like.

The clamp 712 is operable to attach an end of a component part or strip 504 to the outer circumference of the mandrel 708 and against a molding surface 736. Accordingly, the clamp 712 can include a jaw 728 and a releasable pressure mechanism 732 that can be operated to supply a force that clamps the end of the strip 504 between the jaw 728 and the outer circumference of the mandrel 708. As an example, but without limitation, the pressure mechanism 732 can include a bolt or thumbscrew with a bearing surface that acts on the jaw 728, and threads that are received by a threaded hole formed in the mandrel 708. The forming or molding surface 736 at or near the outer circumference of the mandrel 708 has a shape in the form (or the approximate form) of the surface at or near the inner circumference 408 of the annular composite structure 104. The surface of the clamp 712 jaw 728 that bears on the strip 504 can have a shape in the form (or the approximate form) of the surface at or near the outer circumference 404 of the annular composite structure 104. In addition, the molding surface 736 at or near the outer circumference of the mandrel 708 can include or be associated with a heater 738. For example, in accordance with embodiments of the present disclosure, heating elements, such as, but not limited to, electrical resistance heaters, conduits for heated fluids, or other mechanisms for providing heat to the molding surface 736, can be placed at or near the molding surface 736 of the mandrel 708.

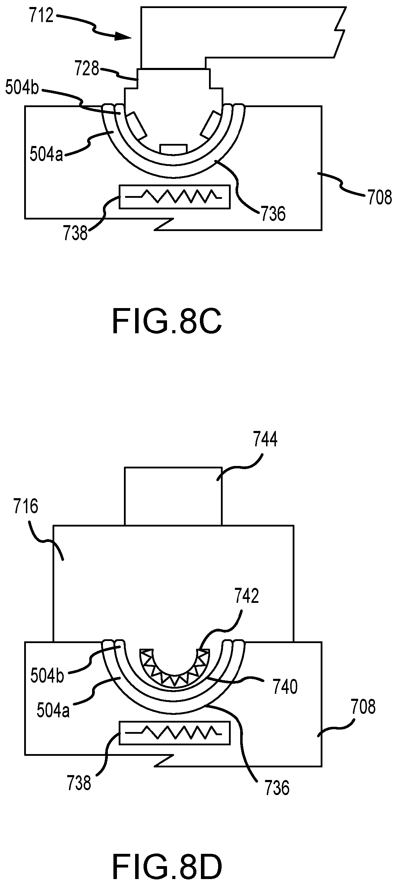

More particularly, a single or first strip 504a has a first surface that is held against the molding surface 736 at the outer circumference of the mandrel 708 by the jaw 728 of the clamp mechanism 712, which presses on a second surface of the strip 504a (e.g. as illustrated in Fig. 8A). After a first strip 504a or layer has been placed along the molding surface 736, a subsequent or second strip 504b has a first surface that is held against the second surface of the first strip 504a by the jaw 728 of the clamp mechanism 712, which now presses on a second surface of the second strip 504b (e.g. as illustrated in **Fig. 8C****).** The first surface of the first strip 504a remains in position against the molding surface 736. In accordance with embodiments of the present disclosure, the clamp 712 used to secure the end of the first strip 504b may be the same as or different than the clamp 712 used to secure the end of subsequent strips 504. Moreover, a jaw 728 used to clamp the end of the first strip 504a can differ, for example in a size or contour of the contact surface of the jaw 728, from a jaw 728 used to clamp the end of a subsequent strip, for instance to accommodate dimensional differences resulting from the different number of layers.

The forming assembly 716 generally ensures that the first surface of the first strip 504a is in complete contact with the molding surface 736 of the mandrel 708. The forming assembly 716 can be configured as a shoe or roller assembly that includes a forming surface 740 having a shape in the form (or the approximate form) of the surface at or near the outer circumference 404 of the annular composite structure 104. Like the molding surface 736 of the mandrel 708, the forming surface 740, can include or be associated with a heater 742. In addition, the forming assembly 716 can include or can be acted on by a press assembly 744. The press assembly 744 can be operated to selectively apply pressure to a portion of the strip 504 between the forming surface 740 of the forming assembly 716 and the molding surface 736 of the mandrel 708.

More particularly, with respect to the placement of first strip 504a about the mandrel 708, the first surface of the first strip 504a is pressed against the molding surface 736 by the forming surface 740, which acts on the second surface of the first strip 504a (e.g. as illustrated in **Fig. 8B****).** After a first strip 504a or layer has been placed along the molding surface 736, a subsequent or second strip 504b has a first surface that is pressed against the second surface of the first strip 504a by the forming surface 740, which now presses on a second surface of the second strip 504b (e.g. as illustrated in **Fig. 8D****).** The first surface of the first strip 504a remains in position against the molding surface 736. In accordance with embodiments of the present disclosure, the forming surface 740 used with respect to the first strip 504a may be the same as or different than the forming surface 740 used with respect to subsequent strips 504. For example, a size or contour of the forming surface used with just the first strip 504a can be different than the forming surface 740 used with the first 504a and second 504b strips to accommodate dimensional differences resulting from the different number of layers.

The feed assembly 720 supports portions of the component part or strip 504 that are not held by the clamp 712 or that have not been pressed against the molding surface 736 of the mandrel 708 by the forming assembly 716. In accordance with at least some embodiments of the present disclosure, the feed assembly 720 can include a number of clips or hangers that attach to and support the strip 504, and that are themselves supported and selectively moved by a chain running on a pair of sprockets. In addition, the feed assembly 720 positions the component part 504 adjacent the preheating assembly 724, moves the component part 504 past the preheating assembly 724, and maintains tension on the component part 504 as the component part 504 is wound onto the mandrel 708. In accordance with embodiments of the present disclosure, the preheating assembly 724 can include a plurality of infrared heaters positioned on opposite sides of a strip 504 being carried by the feed assembly 720.

In **Fig. 7A****,** a first component part or strip 504a is being carried by the feed assembly 720, and has a first end fixed to the molding surface 736 of the mandrel 708 by a first clamp 712a. As can be appreciated by one of skill in the art after consideration of the present disclosure, by operating the preheating assembly 724 to warm the strip 504 to a processing temperature that is less than the melting point temperature of the thermoplastic material of the strip 504, the strip 504 can be made pliable.

In **Fig. 7B****,** the mandrel 708 has been rotated in a clockwise direction (by about 45° in the figure), and the warmed component part 504 has been partially wound about the molding surface 736 of the mandrel 708. In addition, the press assembly 744 has been operated to move the forming surface 740 of the forming assembly 716 into contact with the strip 504, and further to apply pressure to the strip 504. Additional heat can be applied to the portion of the strip 504 acted on by the forming assembly 716 by heaters in or associated with the forming assembly 716 and/or the mandrel 708. The applied pressure, in combination with the applied heat, causes the strip 504 to conform to the contours of the molding surface 736 of the mandrel 708 and the forming surface 740 of the forming assembly 716. As discussed in greater detail elsewhere herein, the process of rotating the mandrel 708, and forcing the strip 504 between the molding surface 736 in the forming surface 740 can continue until the first strip 504a is completely wound about the mandrel 708.

In **Fig. 7C****,** the mandrel 708 is shown with the first strip 504a completely wound about the mandrel 708 such that the ends of the first strip 504a are adjacent one another, defining a seam 508. In this view, the mandrel 708 is rotated in the clockwise direction by 270° relative to its position in Fig. 7A. In addition, a first end of a second strip 504b is fixed to the mandrel 708 by a second clamp 712b. The end of the second strip 504b is thus fixed to the mandrel 708 at a point that is offset by 90° from the point at which the end of the first strip 504a was fixed.

In **Fig. 7D****,** the mandrel 708 has been rotated by a further 45° relative to its position in **Fig. 7C****,** partially winding the second strip 504b about the mandrel 708. As can be appreciated by one of skill in the art after consideration of the present disclosure, the first surface of the second strip 504b in this example is being wound about the outer or second surface of the first strip 504a, which has itself been contoured by the molding 736 and forming 740 surfaces. In addition, the forming assembly 716 has been operated to heat and press against the second surface of the second strip 504b, thereby forcing a portion of the second strip 504b between the first strip 504a, as contoured by the molding surface 736 of the mandrel 708, and the forming surface 740 of the forming assembly 716. In addition to shaping the second strip 504b, the first504a and second 504b strips are at least partially consolidated by the applied heat and pressure.

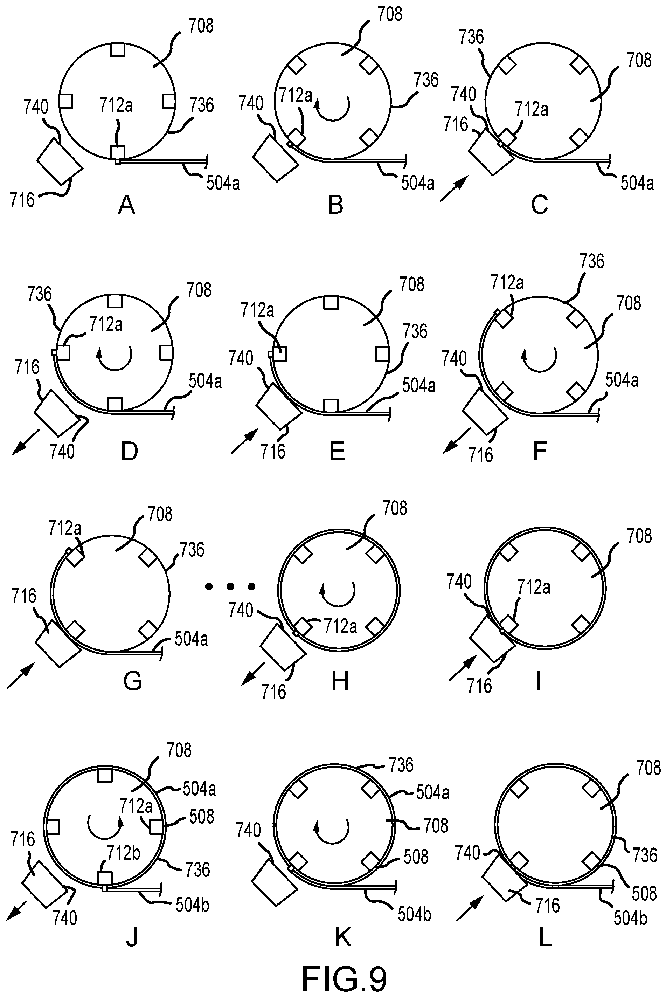

An example sequence of operation of an example system 704 for manufacturing an annular composite structure 104, generally configured as illustrated in **Figs. 7A-7D** and **8A-8D,** is depicted in **Fig. 9****.** In A of **Fig. 9****,** a first end of a first strip 504a has been fixed to the mandrel 708 by the first clamp 712a. As shown in B of **Fig. 9****,** the mandrel 708 is then rotated in a clockwise direction, in this example by 45 degrees, while tension is maintained on the strip 504a by the feed assembly 720. A portion of the first strip 504a is then pressed between the molding surface 736 and the forming surface 740 by the forming assembly 716, as shown in C of **Fig. 9****.**

In D of **Fig. 9****,** the forming assembly 716 has been moved away from the molding surface 736 of the mandrel 708, releasing the pressure on the first strip 504a, and the mandrel 708 has been further rotated in a clockwise direction (here by 45 degrees). In E of **Fig. 9****,** a next portion of the first strip 504b is then heated and pressed between the molding surface 736 and the forming surface 740 by the forming assembly 716. As can be appreciated by one of skill in the art after consideration of the present disclosure, immediately adjacent or overlapping portions of the strip 504 are pressed between the molding surface 736 and the forming surface 740 in the series of pressing operations. In F of **Fig. 9****,** the forming assembly 716 has again been moved away from the molding surface 736 of the mandrel 708, releasing the pressure on the first strip 504a, and the mandrel 708 has been still further rotated in a clockwise direction (here by 45 degrees). A next portion of the first strip 504a is then pressed between the molding surface 736 and the forming surface 740 by the forming assembly 716, as shown in G of **Fig. 9****.** These processes continue until the first strip 504a has been completely wound about the mandrel 708 (see H and I of **Fig. 9****).** Moreover, in this example, the length of the strips 504 are equal or about equal to the circumference of the annular composite structure 104, at least at the position of the individual strips 504 within the structure 104. Accordingly, when a strip 504 is completely wound about the mandrel, a seam 508 is formed between the ends of the strip 504.

In J of **Fig. 9****,** the forming assembly 716 has been moved away from the molding surface 736 of the mandrel 708, and the mandrel 708 has been rotated in a counterclockwise direction (here by 135 degrees). More particularly, in this example, the mandrel 708 has been rotated in a counterclockwise direction by an amount that places a second clamp 712b in position to receive a first end of a second strip 504b. The second strip 504b is then attached to the second clamp 712b. In accordance with embodiments of the present disclosure, the rotation of the mandrel 708 places the seam 508 of the first strip 504a in a location different than the first end of the second strip 504b. Accordingly, the seams 508 of the various strips 504 can be placed at different locations about the circumference of the annular composite structure 104. Moreover, in this example, the mandrel 708 is rotated in a counterclockwise direction to place the seam 508 of the first strip 504a in a location that will be overlaid by a portion in a first half of the second strip 504b, while minimizing the amount by which the mandrel 708 must be rotated. In accordance with embodiments of the present disclosure, the locations of the seams 508 can be offset from one another by, as examples, at least 10°, at least 45°, or at least 90°. As depicted in K and L of **Fig. 9****,** the process then proceeds, with the second strip 504b being placed or wound over the first strip 504a. This general process can then be continued until the required number of strips 504 have been wound about the mandrel 708.

As can be appreciated from the present disclosure, the amounts by which the mandrel 708 is rotated in the various steps will depend at least in part in the relative dimensions of the components of the system 704 and the strips 504 applied in any particular implementation. As can also be appreciated by one of skill in the art after consideration of the present disclosure, when the forming assembly 716 is configured as a shoe type assembly, the forming surface 740 can be moved to simultaneously form some portion of the outer circumference of the annular structure 104. When the forming assembly 716 is configured as a roller assembly type assembly, the forming surface 740 can be engaged continuously, and the forming of the strip 504 can be performed as the mandrel 708 is rotated to draw the strip 504 between the molding surface 736 and the forming surface 740. That is, the forming surface 740 of a forming assembly 716 configured as a roller assembly need not be withdrawn in order to rotate the mandrel 708, and can instead remain pressed against the second surface of the outer-most strip 504. As can be further appreciated by one of skill in the art after consideration of the present disclosure, the forming assembly 716 can be changed, for example to present a forming surface 740 with a different contour, or can be repositioned, as additional strips 504 are added to the structure 104.

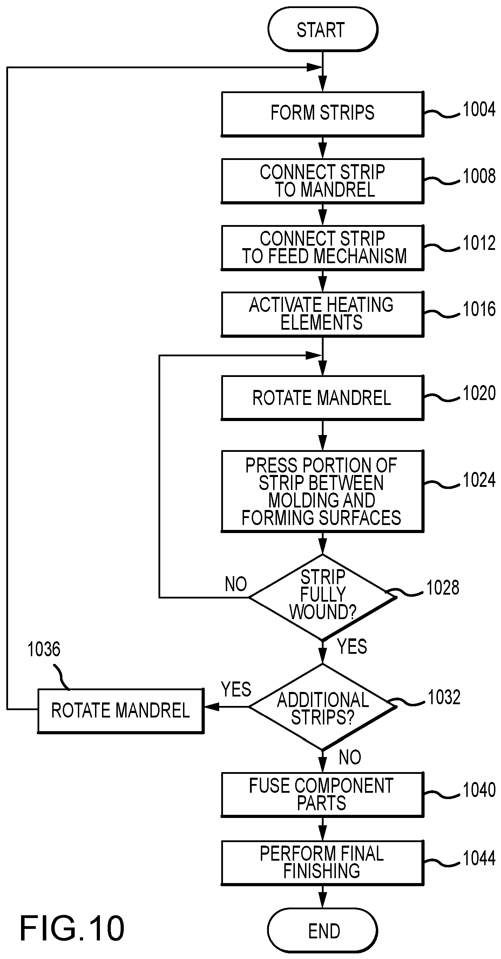

**Fig. 10** is a flowchart illustrating aspects of a method for forming an annular composite structure 104 in accordance with embodiments of the present disclosure.

Initially, at step 1004, a strip or component part 504 is formed. Forming a strip 504 can include cutting the strip 504 from a larger sheet of fiber reinforced thermoplastic material. More particular, the length of a strip 504 can be sized such that it is equal to the circumference of the annular composite structure 104, at least at the intended location of that strip within the structure 104. In addition, the width of a strip 504 can be sized such to be about equal to the width of the annular composite structure after the strip has been formed into a final or approximately final shape. In accordance with other embodiments of the present disclosure, the length of a strip 504 can be less than or greater than the circumference of the annular composite structure, depending on different layup configurations. In addition, the angle of the reinforcing fibers within a strip can be determined through the selection of the sheet of material from which a strip is cut, and/or from the way in which the strip 504 is cut from the larger sheet. A strip 504 can include multiple layers 604 of fiber reinforced thermoplastic material. Alternatively or in addition, a strip 504 can include multiple layers 604 of single or multiple layer fiber reinforced thermoplastic material. In accordance with still other embodiments of the present disclosure, one or more strips 504 can be supplied in a width and/or length that is suitable for inclusion in the annular composite structure 104 without any cutting.

At step 1008, a first end of a strip 504 is connected to the mandrel 708, for example provided as part of a system 704 as described herein. This can include fixing the end of the strip 504 to the mandrel 708 using a clamp 712 carried by the mandrel 708. In accordance with at least some embodiments of the present disclosure, the clamp 712 includes a jaw 728 that is contoured similarly to or the same as the forming surface 736 of the mandrel 708 and/or a contour of the annular composite structure 104 at a location occupied by the strip 504. In addition, connecting an end of the strip 504 to the mandrel 708 can include operating a pressure mechanism 732 to apply a force that holds the strip 504 between the forming surface 736 of the mandrel 708 and the jaw 728. The remainder of the strip 504 is then connected to the feed assembly 720 of the system 704 for manufacturing the annular composite structure 104 (step 1012). Connecting the strip 504 to the feed assembly 720 can include clipping the strip to a chain or carrier along a longitudinal edge of the strip 504. Heating elements included in the preheating assembly 724 can then be activated (step 1016). In general, the preheating assembly 724 is operated to raise the temperature of a strip 504 carried by the feed assembly 720, thereby making the strip 504 more pliable. In addition, heating elements in other components of the system 704, such as heating elements 738 incorporated into the mandrel 708, and heating elements 742 in or associated with a forming assembly 716, can be activated.

At step 1020, the mandrel 708 is rotated, thereby drawing the strip 504 around a portion of the outer circumference of the mandrel 708. In accordance with at least some embodiments of the present disclosure, the feed assembly 720 maintains tension on the strip 504 as it is drawn around the mandrel 708, promoting tight engagement of the strip 504 with the molding surface 736 of the mandrel 708. Next, the forming assembly 716 is operated to press a portion of the strip 504 against the molding surface 736 of the mandrel 708 (step 1024). In embodiments in which the forming assembly 716 is configured as a shoe, the shoe assembly 716 is moved towards the molding surface 736 to apply pressure between the molding surface 736 and the forming surface 740 of the shoe assembly 716, and is then retracted to facilitate a subsequent rotation step or other step of the process. In embodiments in which the forming assembly 716 is configured as a roller, the forming assembly 716 can be configured to continuously apply pressure as the strip 504 is drawn onto the mandrel 708. In addition, the molding surface 736, the forming surface 740, or both the molding 736 and forming 740 surfaces can be heated (for example using heating elements 738 and 742) to raise the temperature of the strip 504 to at or less than the melting temperature of the thermoplastic material of the strip 504, making the strip 504 more pliable and thereby helping to ensure conformance of the strip 504 to the contours of the molding 736 and the forming 740 surfaces. Moreover, where a strip 504 is being laid over another strip 504 (or over itself for a strip 504 with a length greater than a circumference of the molding surface 736), the heat and pressure applied by the forming assembly 716 can fuse or otherwise consolidate the strips 504 or strip 504 portions.

At step 1028, a determination is made as to whether the strip 504 has been fully wound about the mandrel 708. If a length of the strip 504 remains to be wound about the mandrel 708, the process returns to step 1020. If the strip 504 is fully wound about the mandrel 708 the clamp 712 can be released from the strip 504, and a determination is next made as to whether additional strips 504 remain for inclusion in the annular composite structure 104 (step 1032). If additional strips 504 are to be incorporated into the structure 104, the mandrel 708 is rotated (step 1036). In particular, rotating the mandrel 708 allows an end or the ends of the previously wound strip 504 to be adjacent an intermediate portion of the next strip 504, rather than an end of the next strip 504. That is, the locations of the ends of the strips 504 forming component parts of the annular composite structure 104 can be placed at different locations about the circumference of the structure 104. In accordance with the least some embodiments of the present disclosure, the rotation of the mandrel 708 at step 1036 is in a direction opposite the direction used to wind the strips 504 about the mandrel 708. Moving the mandrel 708 in the opposite direction to that used to wind the previous strip or strips 504 about the mandrel can reduce the amount of rotation required to place the seam of the previously applied strip 504 under a portion of the next strip 504. The process can then return to step 1004, and a next strip for inclusion in the structure 104 can be formed (or selected from a set of previously formed strips 504). As can be appreciated by one of skill in the art after consideration of the present disclosure, a strip 504 can be the same or different than a previously wound strip 504 in its configuration, including in the number of layers and/or the orientation of reinforcing layers, or in its overall dimensions. The process of winding, forming, and fusing can then continue until all of the strips 504 have been incorporated into the structure 104.

If it is determined that no additional strips remain to be incorporated into the annular composite structure 104, the strips 504 that have been wound about the mandrel 708 can be placed in a final mold and fused to one another (step 1040). Final molding and fusing the strips or component parts 504 can include placing a multipart external mold over the strips 504, while the strips 504 remain in place against the forming surface 736 of the mandrel 708, and applying heat and pressure, forming a fused or integral annular composite structure 104. In accordance with at least some embodiments of the present disclosure, fusing of the layers, whether those layers are formed from the same or different strips 504, can be performed simultaneously with the step winding of the strips 504 about the mandrel 708 under heat and pressure as described herein. In such embodiments, a final molding and fusing step can be eliminated.

The structure 104 can then be removed from the mold parts and/or mandrel, and final finishing steps can be performed (step 1044). The final finishing steps can include drilling spoke holes and a valve hole, removing flash, adding labels and graphics, and the like. The process of forming the annular composite structure 104 is then complete.

Although various examples have been discussed in which component parts or strips 504 of fiber reinforced thermoplastic material used to form an annular composite structure 104 have lengths that are equal or about equal to a circumference of that structure 104, other configurations are possible. For example, a strip 504 can have a length that is greater than the circumference of the annular composite structure 104. As another example, a structure 104 can be formed from strips 504 that each have a length that is less than a circumference of the completed structure 104. As still another example, strips 504 having different lengths 504, widths, number and configuration of layers 604, or other differences can be incorporated into a composite structure 104. Moreover, although various examples have been discussed in which multiple strips 504 are consolidated to form a structure 104, other embodiments of the present disclosure encompass the formation of a structure 104 using a single strip 504 having a length long enough that it overlaps itself as it is wound on the mandrel 708.

In addition, as discussed herein, a component part or strip 504 can be formed from one or more layers 604 of thermoplastic fiber reinforced material. A layer 604 used to form a strip 504 can itself be formed from a piece of material having multiple layers or plies of reinforcing materials impregnated with a thermoplastic material. For example, a layer 604 can include a layer of unidirectional reinforcing fibers that are non-parallel to the sides of the strip 504, and a layer with a relatively sparse number of reinforcing fibers that are generally parallel to the sides of the strip 504. Such a configuration provides a strip 504 that can withstand a relatively large amount of tension while it is wound about the mandrel 708, while at the same time allowing fibers oriented generally transverse to a plane of the structure 104 to be incorporated into that structure 104.

The foregoing discussion has been presented for purposes of illustration and description. Further, the description is not intended to limit the disclosed structures, systems and methods to the forms disclosed herein. Consequently, variations and modifications commensurate with the above teachings, within the skill or knowledge of the relevant art, are within the scope of the present invention, provided they fall within the scope of the appended claims. The embodiments described hereinabove are further intended to explain the best mode presently known of practicing the disclosed structures, systems and methods, and to enable others skilled in the art to utilize the disclosed structures, systems and methods in such or in other embodiments and with various modifications required by the particular application or use, provided they fall within the scope of the appended claims.

## Claims

1. An annular composite structure (104), comprising:
a first component part (504) and a second component part (504), wherein each of the component parts (504) includes at least one layer of a fiber reinforced thermoplastic material (604); and **characterized in that**
the annular composite structure (104) has a rim shape;
the first component part (504) extends about all of a circumference of the annular composite structure (104) ;
the second component part (504) extends about all of the circumference of the annular composite structure (104);
the first component part (504) is fused to the second component part (504); and
a first end and a second end of the first component part (504) meet at a first seam (508), a first end and a second end of the second component part (504) meet at a second seam (508), and the first seam (508) and the second seam (508) are at different locations about the circumference of the annular composite structure (104);
an outer facing surface of the annular composite structure (104) has a cross-sectional dished profile.

2. The annular composite structure (104) of claim 1, wherein the location of the first seam (508) is at least 45° offset from the location of the second seam (508).

3. The annular composite structure (104) of claim 1, further comprising:
a third component part (504) including at least one layer of the fiber reinforced thermoplastic material (608), and wherein the third component part (504) extends about all of the circumference of the annular composite structure (104); and
a fourth component part (504) including at least one layer of the fiber reinforced thermoplastic material (608), and wherein the fourth component part (504) extends about all of the circumference of the annular composite structure (104),
wherein a first end of the third component part (504) and a second end of the third component part (504) meet at a third seam (508),
wherein a first end of the fourth component part (504) and a second end of the fourth component part (504) meet at a fourth seam (508),
wherein the first, second, third, and fourth seams (508) are spaced about the circumference of the annular composite structure (104) at 90 degree intervals, and
wherein the first, second, third, and fourth component parts (504) are fused to one another.

4. The annular composite structure (104) of claim 3, wherein
each one of the component parts (504) includes multiple layers of the fiber reinforced thermoplastic material (604).

5. The annular composite structure (104) of claim 4, wherein at least some of the layers of the fiber reinforced thermoplastic material (604) of each component part (504) include unidirectional fibers, with the unidirectional fibers in at least one of the layers oriented toward a different direction than the unidirectional fibers in others of the layers (604).

6. The annular composite structure (104) of claim 1, wherein the annular composite structure (104) is a bicycle wheel rim (108).

## Patentansprüche

1. Eine ringförmige Verbundstruktur (104), umfassend:
ein erstes Bauteil (504) und ein zweites Bauteil (504), wobei jedes der Bauteile (504) mindestens eine Schicht aus einem faserverstärkten thermoplastischen Material (604) enthält; **dadurch gekennzeichnet,**
**dass** die ringförmige Verbundstruktur (104) die Form eines Kranzes hat;
sich das erste Bauteil (504) über den gesamten Umfang der ringförmigen Verbundstruktur (104) erstreckt;
sich das zweite Bauteil (504) über den gesamten Umfang der ringförmigen Verbundstruktur (104) erstreckt;
das erste Bauteil (504) mit dem zweiten Bauteil (504) verschmolzen ist; und
ein erstes Ende und ein zweites Ende des ersten Bauteils (504) an einer ersten Naht (508) aufeinandertreffen, ein erstes Ende und ein zweites Ende des zweiten Bauteils (504) an einer zweiten Naht (508) aufeinandertreffen, und die erste Naht (508) und die zweite Naht (508) sich an unterschiedlichen Stellen entlang des Umfangs der ringförmigen Verbundstruktur (104) befinden;
eine nach außen gerichtete Oberfläche der ringförmigen Verbundstruktur (104) ein konkaves Querschnittsprofil aufweist.

2. Ringartige Verbundstruktur (104), nach Anspruch 1, wobei die Lage der ersten Naht (508) um mindestens 45° gegenüber der Lage der zweiten Naht (508) versetzt ist.

3. Ringartige Verbundstruktur (104), nach Anspruch 1, die ferner umfasst:
ein drittes Bauteil (504), das mindestens eine Schicht aus dem faserverstärkten thermoplastischen Material (608) enthält, wobei sich das dritte Bauteil (504) über den gesamten Umfang der ringartigen Verbundstruktur (104) erstreckt; und
ein viertes Bauteil (504), das mindestens eine Schicht des faserverstärkten thermoplastischen Materials (608) enthält, wobei sich das vierte Bauteil (504) über den gesamten Umfang der ringförmigen Verbundstruktur (104) erstreckt,
wobei ein erstes Ende des dritten Bauteils (504) und ein zweites Ende des dritten Bauteils (504) an einer dritten Naht (508) aufeinandertreffen,
wobei ein erstes Ende des vierten Bauteils (504) und ein zweites Ende des vierten Bauteils (504) an einer vierten Naht (508) treffen,
wobei die erste, zweite, dritte und vierte Naht (508) in Abständen von 90° um den Umfang der ringförmigen Verbundstruktur (104) angeordnet sind, und
wobei die ersten, zweiten, dritten und vierten Bauteile (504) miteinander verschmolzen sind.

4. Ringförmige Verbundstruktur (104), nach Anspruch 3, wobei jedes der Bauteile (504) mehrere Schichten des faserverstärkten thermoplastischen Materials (604) enthält.

5. Ringförmige Verbundstruktur (104), nach Anspruch 4, wobei mindestens einige der Schichten des faserverstärkten thermoplastischen Materials (604) jedes Bauteils (504) unidirektionale Fasern enthalten, wobei die unidirektionalen Fasern in mindestens einer der Schichten in eine andere Richtung ausgerichtet sind als die unidirektionalen Fasern in anderen der Schichten (604).

6. Ringförmige Verbundstruktur (104), nach Anspruch 1, wobei die ringförmige Verbundstruktur (104) eine Fahrradfelge (108) ist.

## Revendications

1. - Structure composite annulaire (104), comprenant :
une première partie composante (504) et une deuxième partie composante (504), chacune des parties composantes (504) comprenant au moins une couche d'un matériau thermoplastique renforcé par des fibres (604) ; et **caractérisée par le fait que**
la structure composite annulaire (104) a une forme de jante ;
la première partie composante (504) s'étend autour de la totalité de la périphérie de la structure composite annulaire (104) ;
la deuxième partie composante (504) s'étend autour de la totalité de la périphérie de la structure composite annulaire (104) ;
la première partie composante (504) est fusionnée à la deuxième partie composante (504) ; et
une première extrémité et une seconde extrémité de la première partie composante (504) se rejoignent à une première jointure (508), une première extrémité et une seconde extrémité de la deuxième partie composante (504) se rejoignent à une seconde jointure (508), et la première jointure (508) et la seconde jointure (508) se trouvent à des emplacements différents autour de la périphérie de la structure composite annulaire (104) ;
une surface tournée vers l'extérieur de la structure composite annulaire (104) présente un profil bombé en coupe transversale.

2. - Structure composite annulaire (104) selon la revendication 1, dans laquelle l'emplacement de la première jointure (508) est décalé d'au moins 45° par rapport à l'emplacement de la seconde jointure (508).

3. - Structure composite annulaire (104) selon la revendication 1, comprenant en outre :
une troisième partie composante (504) comprenant au moins une couche du matériau thermoplastique renforcé par des fibres (608), et la troisième partie composante (504) s'étendant autour de la totalité de la périphérie de la structure composite annulaire (104) ; et
une quatrième partie composante (504) comprenant au moins une couche du matériau thermoplastique renforcé par des fibres (608), et la quatrième partie composante (504) s'étendant autour de la totalité de la périphérie de la structure composite annulaire (104),
dans laquelle une première extrémité de la troisième partie composante (504) et une seconde extrémité de la troisième partie composante (504) se rejoignent à une troisième jointure (508),
dans laquelle une première extrémité de la quatrième partie composante (504) et une seconde extrémité de la quatrième partie composante (504) se rejoignent à une quatrième jointure (508),
dans laquelle les première, deuxième, troisième et quatrième jointures (508) sont espacées à des intervalles de 90 degrés autour de la périphérie de la structure composite annulaire (104), et
dans laquelle les première, deuxième, troisième et quatrième parties composantes (504) sont fusionnées entre elles.

4. - Structure composite annulaire (104) selon la revendication 3, dans laquelle
chacune des parties composantes (504) comprend plusieurs couches du matériau thermoplastique renforcé par des fibres (604).

5. - Structure composite annulaire (104) selon la revendication 4, dans laquelle au moins certaines des couches du matériau thermoplastique renforcé par des fibres (604) de chaque partie composante (504) comprennent des fibres unidirectionnelles, les fibres unidirectionnelles dans au moins l'une des couches étant orientées vers une direction différente de celle des fibres unidirectionnelles dans les autres des couches (604).

6. - Structure composite annulaire (104) selon la revendication 1, dans laquelle la structure composite annulaire (104) est une jante de roue de bicyclette (108).
